# FASCICULE DE BREVET EUROPEEN

(11) **EP 1 844 685 B1**
(45) Date de publication et mention de la délivrance du brevet: **02.09.2009**
(21) Numéro de dépôt: 07356046.8
(22) Date de dépôt: 11.04.2007
(51) Int. Cl.: A47J 27/08

(54) **Appareil de cuisson sous pression à tarage réglable et décompression maitrisée**
Druckkochgerät mit verstellbarem Sollwert und überwachter Dekompression
Pressure-cooking device with adjustable set-point and controlled decompression

(30) Priorité: 11.04.2006 FR 0603207
(43) Date de publication de la demande: 17.10.2007
(73) Titulaire: SEB S.A., 69132 Ecully Cedex (FR)
(72) Inventeur: Chameroy, Eric, 21260 Veronnes (FR); Cartigny, Michel Pierre, 21310 Mirebeau sur Bèze (FR)
(74) Mandataire: Martin, Didier Roland Valéry

(56) Documents cités:
- EP-A- 1 535 553

## Description

La présente invention se rapporte au domaine technique général des appareils de cuisson d'aliments, en particulier de nature domestique, destinés à former une enceinte de cuisson étanche, au sein de laquelle sont cuits des aliments sous pression de vapeur.

La présente invention concerne plus particulièrement un appareil de cuisson d'aliments sous pression, agencé pour former une enceinte de cuisson, comprenant un orifice de mise en communication de l'intérieur de l'enceinte avec l'extérieur, une soupape de régulation tarée coopérant avec l'orifice pour maintenir la pression régnant dans l'enceinte à un niveau prédéterminé, et un moyen d'ajustement du tarage de ladite soupape tarée, ledit moyen d'ajustement étant capable de se déplacer entre au moins deux positions correspondant respectivement à deux valeurs distinctes dudit niveau prédéterminé.

Les appareils de cuisson sous pression, en particulier à usage domestique, du genre autocuiseur, sont bien connus dans l'art antérieur. De tels appareils comprennent généralement une cuve et un couvercle destiné à être rapporté sur la cuve pour former une enceinte de cuisson hermétique au sein de laquelle sont placés les aliments à cuire.

Cette enceinte peut ainsi atteindre des pressions et températures élevées lorsque l'appareil est soumis à l'influence d'une source de chauffe.

Ces appareils connus sont en outre pourvus d'une soupape de régulation à coulissement axial, coopérant avec un orifice de fuite ménagé dans le couvercle pour obturer ou libérer ledit orifice en fonction de la pression régnant dans l'enceinte, en vue de maintenir ladite pression à un niveau prédéterminé habituellement désigné par l'appellation *« pression de fonctionnement ».*

Afin d'optimiser le cycle de cuisson, certains de ces appareils connus disposent d'une soupape de régulation tarée et d'un moyen d'ajustement du tarage de cette soupape tarée. Le moyen d'ajustement du tarage est capable de se déplacer entre différentes positions indexées correspondant respectivement à des valeurs distinctes du niveau prédéterminé de pression, chacune de ces valeurs correspondant ainsi à une pression de fonctionnement spécifique adaptée par exemple à un type d'aliment particulier (par exemple légumes ou viande) et/ou à un état d'aliment particulier (aliments congelés par exemple). Ces appareils connus disposent en outre d'un organe de réglage du tarage capable de déplacer le moyen d'ajustement du tarage entre ses positions indexées, ce qui permet de sélectionner une pression de fonctionnement.

Plus particulièrement, la soupape de régulation de ces appareils connus est tarée à l'aide d'un ressort hélicoïdal monté en appui entre d'une part un capuchon coulissant formant le moyen d'ajustement du tarage, et d'autre part la soupape, de telle sorte que la force d'appui exercée par le ressort sur la soupape (qui correspond au niveau de tarage de la soupape) est fonction de la position du capuchon, lequel comprime plus ou moins le ressort selon sa position.

L'organe de réglage du tarage est formé quant à lui par une rampe portée par un sélecteur rotatif dont la rotation est commandée manuellement par l'utilisateur, la rampe comprimant plus ou moins, selon la position angulaire du sélecteur, le capuchon coulissant et donc le ressort, ce qui permet de régler le tarage et donc la pression de fonctionnement.

Par ailleurs, afin que l'utilisateur puisse ouvrir le couvercle, il est nécessaire de décompresser au préalable l'appareil, la pression de fonctionnement étant en effet, du fait de son niveau élevé, incompatible avec une ouverture sécurisée, c'est à dire sans risque d'échappement brutal du couvercle sous l'effet de la pression.

Pour réaliser cette décompression avec l'appareil de cuisson de l'art antérieur décrit dans ce qui précède, l'utilisateur place le sélecteur rotatif dans une position angulaire indexée de décompression, dans laquelle la rampe exerce sur le capuchon un effort d'appui suffisamment faible pour tarer la soupape à un niveau de tarage minimal, permettant de ramener la pression régnant dans l'enceinte à un niveau faible, compatible avec une ouverture sécurisée du couvercle.

Le document EP 1 535 553 A1 montre un appareil de cuisson représentant l'art antérieur.

Ces appareils connus, s'ils donnent généralement pleine satisfaction à l'utilisateur, n'en présentent cependant pas moins un certain nombre d'inconvénients.

En effet, l'utilisateur de ces appareils connus n'est pas en mesure de maîtriser efficacement la progressivité du flux gazeux de décompression, étant donné que lorsque le sélecteur est en position indexée de décompression, l'orifice de fuite reste soumis à l'action d'obturation automatique de la soupape tarée.

Cette disposition technique est susceptible de conduire à la libération brutale et incontrôlée d'une section importante de fuite de vapeur, pouvant générer une éjection de matières alimentaires et/ou d'eau à l'extérieur de l'appareil par apparition d'un phénomène de *« moussage »* des aliments (parfois également appelé *« émulsion »* par l'homme de l'art) bien connu dans le domaine.

En outre, la décompression n'étant obtenue qu'en abaissant le niveau de tarage de la soupape de régulation à un niveau minimal, elle ne peut donc être totale. En effet, la soupape de régulation est susceptible de venir réobturer complètement l'orifice de fuite dès que la pression régnant dans l'enceinte atteindra le niveau (supérieur à la pression atmosphérique) correspondant audit niveau de tarage minimal. Une telle impossibilité de réaliser une décompression vraiment totale de l'enceinte avant ouverture du couvercle est susceptible de soumettre l'utilisateur, lors de l'ouverture du couvercle, à une bouffée de vapeur résiduelle qui, sans être dangereuse, n'en est pas moins incommodante.

Les objets assignés à l'invention visent en conséquence à proposer un nouvel appareil de cuisson d'aliments sous pression portant remède aux différents inconvénients de l'art antérieur énumérés précédemment et qui, tout en étant de construction particulièrement fiable, simple et économique, permet à la fois d'une part une décompression totale, rapide et maîtrisée, et d'autre part la possibilité de sélectionner différents niveaux de pression de fonctionnement.

Un autre objet de l'invention vise à proposer un nouvel appareil de cuisson d'aliments sous pression particulièrement facile à utiliser.

Un autre objet de l'invention vise à proposer un nouvel appareil de cuisson d'aliments sous pression de construction particulièrement robuste.

Un autre objet de l'invention vise à proposer un nouvel appareil de cuisson d'aliments sous pression de conception particulièrement simple.

Un autre objet de l'invention vise à proposer un nouvel appareil de cuisson d'aliments sous pression autorisant un excellent contrôle de la décompression.

Un autre objet de l'invention vise à proposer un nouvel appareil de cuisson d'aliments sous pression de construction particulièrement compacte économique et sûre.

Les objets assignés à l'invention sont atteints à l'aide d'un appareil de cuisson d'aliments sous pression, agencé pour former une enceinte de cuisson, comprenant un orifice de mise en communication de l'intérieur de l'enceinte avec l'extérieur, une soupape de régulation tarée coopérant avec l'orifice pour maintenir la pression régnant dans l'enceinte à un niveau prédéterminé, et un moyen d'ajustement du tarage de ladite soupape tarée, ledit moyen d'ajustement étant capable de se déplacer entre au moins deux positions correspondant respectivement à deux valeurs distinctes dudit niveau prédéterminé, caractérisé en ce qu'il comprend un organe de commande de la décompression de l'enceinte, capable de déplacer la soupape de régulation tarée pour que cette dernière libère l'orifice de façon à mettre en communication l'intérieur de l'enceinte avec l'extérieur, et en ce qu'il comprend un organe de réglage du tarage capable de déplacer le moyen d'ajustement du tarage indépendamment de la soupape de régulation, pour modifier la valeur du niveau prédéterminé.

D'autres particularités et avantages de l'invention apparaîtront et ressortiront plus en détails à la lecture de la description faite ci-après, en référence aux dessins, annexés donnés à titre purement illustratif et non limitatif, dans lesquels :
- la figure 1 illustre, selon une vue générale éclatée en perspective, un appareil de cuisson conforme à l'invention.
- La figure 2 illustre, selon une vue schématique en perspective, le couvercle de l'appareil de la figure 1.
- La figure 3 illustre, selon des vues (de haut en bas) de dessous, de côté et de dessus, un module de commande qui incorpore la soupape de régulation tarée de l'appareil et qui est destiné à être rapporté et fixé de façon amovible sur le couvercle illustré à la figure 2.
- La figure 4 illustre, selon une vue partielle en coupe, un détail de réalisation du module illustré à la figure 3, lorsqu'il est rapporté sur le couvercle illustré à la figure 2.
- La figure 5 illustre, selon une vue en perspective, un détail interne de réalisation du module illustré aux figures précédentes.
- La figure 6 illustre, selon une vue en coupe, le détail de réalisation illustré à la figure 4, la soupape de régulation étant soumise à un premier niveau de tarage.
- La figure 7 illustre, selon une vue en coupe, le détail de réalisation illustré à la figure 6, la soupape de régulation étant soumise à un deuxième niveau de tarage supérieur au premier niveau de tarage.
- La figure 8 illustre, selon une vue en coupe, le détail de réalisation illustré aux figures 6 et 7, la soupape de régulation libérant l'orifice sous l'action de l'organe de commande de la décompression de l'enceinte, pour décompresser l'enceinte.

L'appareil de cuisson d'aliments 1 sous pression conforme à l'invention est destiné à assurer la cuisson de différents aliments, sous pression de vapeur, de préférence dans un contexte domestique.

De façon préférentielle, l'appareil de cuisson 1 conforme à l'invention est constitué par un autocuiseur domestique. Pour des raisons de simplicité de description, il sera exclusivement fait référence dans ce qui suit, en relation avec les dessins annexés, à un appareil 1 constitué par un autocuiseur domestique, étant entendu que l'invention peut également éventuellement concerner des appareils de type professionnel ou semi-professionnel.

De façon classique, l'appareil 1 conforme à l'invention est agencé pour former une enceinte de cuisson, laquelle est de préférence sensiblement étanche et destinée à être soumise à l'action d'une source de chauffe, que cette dernière soit externe (par exemple : plaque de cuisson) ou interne (par exemple : résistance électrique embarquée).

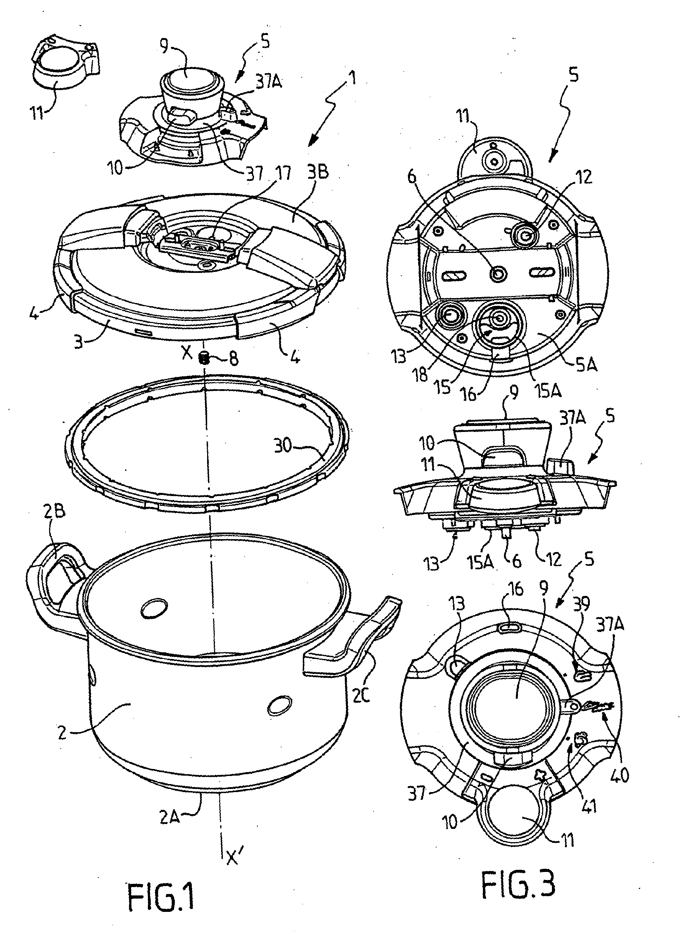

Avantageusement, l'appareil de cuisson 1 conforme à l'invention comprend une cuve 2 formant récipient de cuisson et présentant de façon préférentielle sensiblement une symétrie de révolution selon un axe X-X' (cf. figures 1, 4 et 5). Par la suite, l'adjectif « *axial »* se référera à la direction de cet axe de symétrie X-X', direction qui s'apparente à la direction verticale lorsque l'appareil est en fonctionnement normal. Bien évidemment, la forme de la cuve 2 peut ne pas être une forme de révolution (par exemple une forme ovale), sans pour autant que l'on sorte du cadre de l'invention. La cuve 2 est de manière classique fabriquée à partir d'un matériau métallique tel que de l'acier inoxydable ou de l'aluminium, et est préférentiellement pourvue d'un fond thermo-conducteur 2A solidarisé à la cuve par exemple par frappe à chaud.

La cuve 2 peut également comporter un organe de préhension, formé par exemple par une ou plusieurs poignée(s) 2B, 2C, lesquelles sont préférentiellement au nombre de deux et fixées sur la cuve 2 de façon diamétralement opposée.

L'appareil 1 conforme à l'invention comprend également avantageusement un couvercle 3 destiné à être rapporté et verrouillé sur la cuve 2 pour former avec cette dernière, en coopération avec un joint d'étanchéité 30, l'enceinte de cuisson. La cuve 2 et le couvercle 3 sont conçus de façon que l'enceinte qu'ils forment soit suffisamment hermétique pour permettre une montée en pression de l'appareil.

Le couvercle 3, dont la forme est de préférence complémentaire à celle de la cuve 2 et par exemple est sensiblement discoïde, comprend d'une part une face interne 3A destinée à se trouver en regard de la cuve 2 lorsque le couvercle est verrouillé sur cette dernière, et d'autre part une face externe 3B opposée à ladite face interne 3A, ladite face externe 3B étant destinée à être orientée vers l'extérieur de la cuve 2, lorsque la cuve 2 et le couvercle 3 forment l'enceinte de cuisson. Le couvercle 3 peut être verrouillé ou déverrouillé sur la cuve 2 grâce à un moyen de verrouillage / déverrouillage 4. Ce dernier peut être de tout type connu de l'homme du métier, et par exemple être constitué d'un système à mâchoires (correspondant à la variante représentée aux figures), à segments, à baïonnettes ou encore à étriers, cette liste n'étant nullement limitative.

De façon purement optionnelle mais préférentielle, tel que cela est illustré aux figures, l'appareil 1 comprend un module de commande 5 destiné à être rapporté sur le couvercle 3, de préférence de façon amovible grâce à un axe fileté 6 coopérant avec un trou 7 ménagé dans le couvercle 3 et un écrou de blocage 8 destiné à être vissé sur l'axe fileté 6. Dans la variante illustrée aux figures, le module 5 embarque une série d'organes de fonctionnement et de sécurité, tels que deux boutons de commande 9, 10 commandant respectivement la fermeture et l'ouverture du moyen de verrouillage / déverrouillage 4, un minuteur amovible 11, une soupape de sécurité à la surpression 12, ainsi qu'un doigt coulissant 13 permettant d'une part d'empêcher l'appareil de monter en pression en cas de mauvaise fermeture du couvercle, et d'autre part d'empêcher l'ouverture du couvercle tant que la pression régnant dans l'appareil est incompatible avec la sécurité de l'utilisateur. Ces différents organes de commande et de sécurité sont bien connus en tant que tels et ne seront donc pas décrits plus en détails ici.

Conformément à l'invention, l'appareil 1 comprend un orifice 17 de mise en communication de l'intérieur de l'enceinte avec l'extérieur. L'orifice 17 permet ainsi l'établissement d'un écoulement de fuite de vapeur de l'intérieur de l'enceinte vers l'extérieur. Le terme « *vapeur »* doit être pris ici dans un sens général, c'est-à-dire comme désignant la phase gazeuse ou pseudogazeuse présente au sein de l'enceinte de cuisson et cohabitant avec les aliments et le liquide de cuisson.

De manière préférentielle, tel que cela est illustré aux figures, l'orifice 17 est un orifice traversant ménagé à travers toute l'épaisseur du couvercle 3, et présentant par exemple une forme sensiblement circulaire, d'axe de symétrie Y-Y'.

Selon la conception optionnelle mise en oeuvre dans la variante illustrée aux figures, l'appareil 1 est en outre pourvu d'un conduit 14 permettant de canaliser l'écoulement de fuite de vapeur susceptible de s'échapper par l'orifice 17, de l'intérieur de l'enceinte vers l'extérieur. Dans la variante illustrée aux figures, le conduit 14 s'étend ainsi à partir de l'orifice 17 et se poursuit au sein du module 5 jusque vers l'extérieur de l'appareil 1. Par exemple et de manière préférentielle, le module 5 comprend un fond 5A destiné à être plaqué contre la face supérieure 3B du couvercle 3. Sur le fond 5A est ménagée une chambre 15 délimitée latéralement par un joint d'étanchéité annulaire 15A s'élevant à partir du fond 5A et entourant le volume intérieur délimité par ladite chambre 15. La chambre 15 communique avec un tuyau d'évacuation 16.

Lorsque le module 5 est rapporté et fixé sur le couvercle 3, le joint d'étanchéité 15A vient en appui étanche contre la face supérieure 3B du couvercle, de manière à entourer l'orifice 17 ménagé dans le couvercle 3. Ainsi, lorsque le module 6 est mis en place sur le couvercle 3, la chambre 15 est mise en communication étanche d'une part avec l'intérieur de l'enceinte par l'intermédiaire de l'orifice 17, et d'autre part avec l'extérieur de l'appareil par l'intermédiaire du tuyau d'évacuation 16, la chambre 15 étant interposée entre l'orifice 17 et le tuyau d'évacuation 16. Le conduit 14 est quant à lui formé, dans ce mode de réalisation particulier, par la juxtaposition et la mise en communication mutuelle de l'orifice 17, de la chambre 15 et du tuyau d'évacuation 16.

Bien évidemment, la présence d'un conduit 14 n'est pas nécessaire, et il est tout à fait envisageable que l'appareil 1 soit uniquement pourvu d'un simple orifice 17 débouchant directement à l'extérieur de l'appareil 1.

Conformément à l'invention, l'appareil 1 comprend une soupape de régulation tarée 18 coopérant avec l'orifice 17 pour maintenir la pression régnant dans l'enceinte à un niveau prédéterminé, correspondant à la pression de fonctionnement. Plus précisément, la soupape de régulation tarée 18 vient obturer ou libérer, sous l'effet de la pression régnant dans l'enceinte, l'orifice 17, de manière à maintenir sensiblement la pression régnant dans l'enceinte à un niveau constant, correspondant audit niveau prédéterminé.

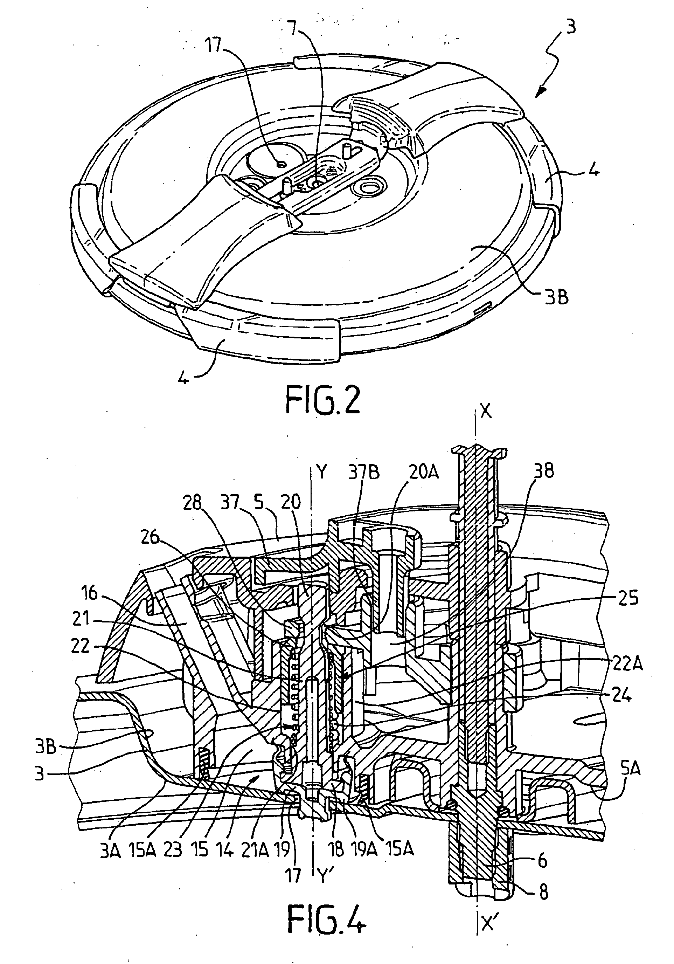

La soupape de régulation tarée 18 est ainsi capable de se déplacer, sous l'effet de la pression régnant dans l'enceinte entre :
- une position de fuite de vapeur, dans laquelle elle libère l'orifice 17, si la pression instantanée régnant dans l'enceinte est supérieure au niveau prédéterminé,
- et une position d'obturation (illustrée aux figures 4, 6 et 7), dans laquelle elle ferme de manière sensiblement hermétique l'orifice 17 si la pression instantanée régnant dans l'enceinte est sensiblement inférieure au niveau prédéterminé, de façon à permettre la montée (ou la limitation) en pression de l'appareil 1.

En d'autres termes, la soupape de régulation tarée 18 est conçue pour d'une part interdire toute communication de l'intérieur de l'enceinte avec l'extérieur tant que la pression régnant dans l'enceinte est inférieure ou égale au niveau prédéterminé et d'autre part mettre automatiquement en communication, sous l'effet de la pression, l'intérieur de l'enceinte avec l'extérieur dès que la pression régnant dans l'enceinte dépasse ledit niveau prédéterminé.

Avantageusement, la soupape de régulation tarée 18 s'étend entre d'une part une tête 19 destinée à obturer l'orifice 17 sous l'effet du tarage et d'autre part une queue 20 libre. De préférence, la soupape 18 comprend de manière classique une tige de soupape 21 s'étendant selon un axe Y-Y' parallèle à l'axe X-X' et situé de préférence à distance de ce dernier, entre une première extrémité correspondant à la tête 19 et une deuxième extrémité opposée correspondant à la queue 20. En d'autres termes, la soupape 18 comprend avantageusement une tige 21 s'étendant axialement entre la queue 20 et la tête 19.

La tête 19 s'étend préférentiellement de manière sensiblement perpendiculaire à l'axe Y-Y' et présente avantageusement une forme générale discoïde, comme cela est illustré aux figures. Avantageusement, la soupape 18 comprend un joint d'étanchéité annulaire 19A s'élevant à partir de la tête 19, de préférence à la périphérie de cette dernière. Ce joint d'étanchéité 19A est destiné à venir en appui sensiblement étanche contre l'enceinte de cuisson, c'est-à-dire en l'occurrence contre la face externe 3B du couvercle 3, de façon à entourer l'orifice 17 et empêcher ainsi la mise en communication de l'intérieur de l'enceinte avec l'extérieur, puisque l'orifice 17 débouche alors dans une chambre fermée par le joint d'étanchéité 19A et la tête 19.

De préférence, le joint d'étanchéité 19A vient de matière avec la tête 19, c'est-à-dire qu'il ne forme avec cette dernière qu'une seule et même pièce d'un seul tenant. De façon particulièrement préférentielle, la queue 20 fait partie intégrante de la tige 21 et vient de matière avec cette dernière, tandis que la tête 19 comprend une coiffe rapportée et fixée sur la tige 21. De préférence, ladite coiffe est réalisée en un matériau élastomère, par exemple du genre silicone, et est conçue pour être emboîtée à force sur l'extrémité correspondante de la tige 21.

Avantageusement, la soupape de régulation tarée 18 est montée à coulissement relativement à l'enceinte de cuisson. De manière particulièrement préférentielle, lorsque la soupape 18 comprend, comme dans la variante illustrée aux figures, une tige 21 s'étendant entre la tête 19 et la queue 20, ladite tige 21 est montée à coulissement axial selon son axe d'extension Y-Y'.

Avantageusement, la tige 21 est enfilée dans un puits de guidage 22 ménagé dans le module 5. Le puits 22 comprend une paroi latérale cylindrique 22A s'élevant à l'intérieur du module 5, à partir d'un trou ménagé dans le fond 5A du module 5 et destiné à déboucher dans la chambre 15 en surplombant l'orifice 17, coaxialement à ce dernier. La tige 21 est insérée à coulissement dans le puits 22 et est guidée en translation par ce dernier, pour pouvoir se déplacer en translation selon l'axe Y-Y'.

Dans le mode de réalisation décrit précédemment et illustré aux figures, la soupape de régulation tarée 18 est embarquée dans le module 5.

Bien évidemment, il est tout à fait envisageable, sans pour autant que l'on sorte du cadre de l'invention, que ladite soupape 18 soit montée directement sur le couvercle 3.

Ainsi que cela a été indiqué précédemment, la soupape de régulation 18 est tarée, c'est-à-dire qu'elle est soumise à un effort de rappel calibré prédéterminé la rappelant en position d'obturation, dans laquelle elle ferme hermétiquement l'orifice 17. La mise en oeuvre d'un tel tarage de la soupape 18 est bien connue en tant que telle, et peut être réalisée par tout moyen connu de l'homme du métier.

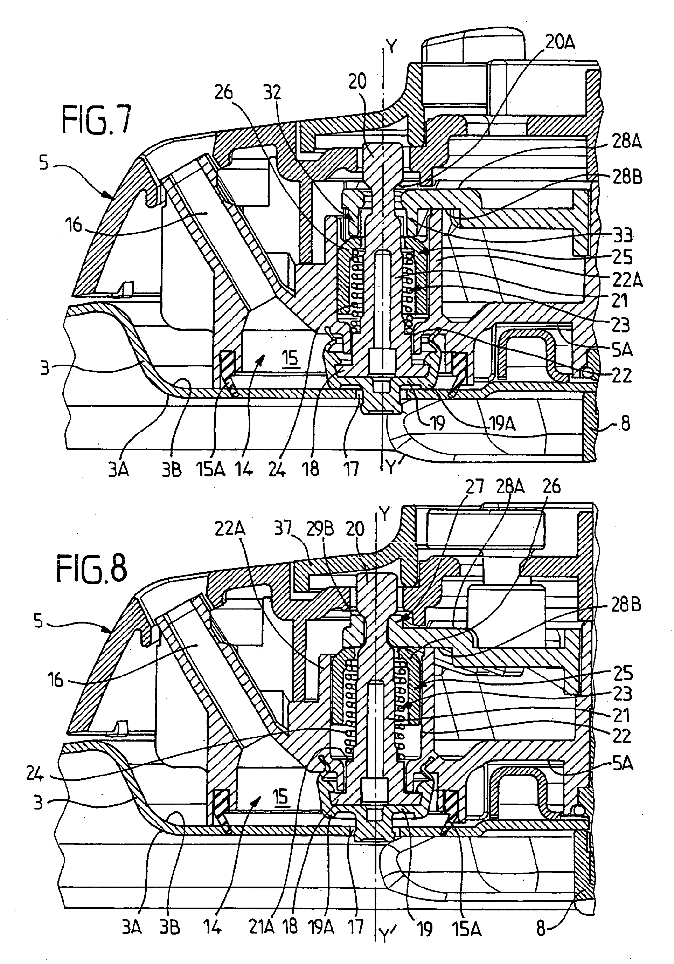

De façon préférentielle, la soupape de régulation 18 est tarée à l'aide d'un corps élastique 23 exerçant un effort de rappel sur la soupape 18 pour maintenir cette dernière dans sa position d'obturation (illustrée aux figures 4, 6 et 7) dans laquelle elle interdit la mise en communication de l'intérieur de l'enceinte avec l'extérieur. De façon préférentielle, le corps élastique 23 comprend un ressort hélicoïdal 24 monté coaxialement à la tige 21, au sein du puits 22, pour exercer sur ladite tige 21 une poussée de rappel. A cette fin, la tige 21 comprend préférentiellement un premier épaulement 21A (cf. figures 4 et 8) contre lequel repose et vient en appui une première extrémité du ressort hélicoïdal 24.

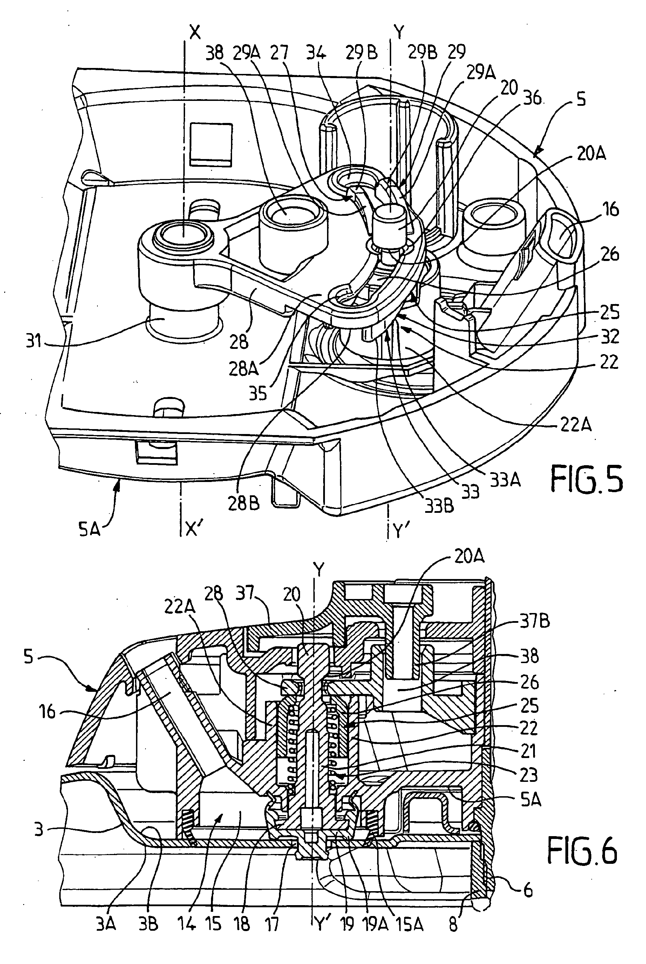

Conformément à l'invention, l'appareil 1 comprend en outre un moyen d'ajustement 25 du tarage de la soupape tarée 18 permettant de faire varier le niveau de tarage, c'est-à-dire l'intensité de l'effort de rappel en position d'obturation, exercé sur la soupape de régulation 18. Le moyen d'ajustement 25 est ainsi capable de se déplacer entre au moins deux positions (illustrées respectivement aux figures 6 et 7) correspondant respectivement à deux valeurs distinctes du niveau prédéterminé de pression. En d'autres termes, le moyen d'ajustement 25 permet de modifier la pression de fonctionnement en augmentant ou en diminuant le tarage de la soupape 18, selon la position qu'il occupe relativement à l'enceinte de cuisson. Dans l'exemple illustré aux figures, le moyen d'ajustement 25 est capable de se déplacer entre seulement deux positions stables correspondant à deux valeurs différentes du niveau prédéterminé de pression, lesdites positions étant de surcroît prédéterminées et indexées, de manière à être directement et aisément identifiables par l'utilisateur. En d'autres termes, dans l'exemple illustré aux figures, le moyen d'ajustement 25 présente un caractère discret car il ne peut se trouver que dans deux positions stables correspondant à deux pressions de fonctionnement distinctes. Il est cependant tout à fait envisageable de mettre en oeuvre un moyen d'ajustement 25 permettant d'ajuster continûment le tarage de la soupape 18, c'est-à-dire pouvant adopter, dans les limites de sa course de déplacement, une infinité de positions distinctes correspondant à autant de tarages différents.

De façon préférentielle, tel que cela est illustré aux figures, le moyen d'ajustement du tarage 25 est monté à coulissement sur l'enceinte de cuisson, de préférence selon l'axe Y-Y'. De manière préférée, le moyen d'ajustement du tarage 25 est capable de se déplacer selon un mouvement de translation pure, sans composante de rotation. Avantageusement, le moyen d'ajustement du tarage 25 comprend une butée coulissante 26 venant en appui contre le moyen de tarage proprement dit, lequel est formé en l'espèce par le corps élastique 23, de façon que le coulissement de ladite butée coulissante 26 modifie l'effort d'appui exercé par la butée coulissante 26 sur le corps élastique 23. En d'autres termes, la soupape 18 est tarée à l'aide d'un corps élastique 23 exerçant un effort d'appui sur une butée coulissante 26 formant le moyen d'ajustement 25 du tarage de la soupape 18, le tarage n'entraînant avantageusement pas de déplacement direct de ladite soupape.

Dans l'exemple de réalisation illustré aux figures, la butée coulissante 26 est préférentiellement formée par un capuchon inséré à coulissement dans le puits 22 et coiffant le ressort 24, de telle sorte qu'une première extrémité de ce dernier est en appui contre la soupape 18 (et plus précisément contre le premier épaulement 21A de la tige 21) tandis qu'une deuxième extrémité du ressort 24 opposée à la première est en appui contre le capuchon 26, ce dernier étant mobile et guidé en translation selon l'axe Y-Y' par le puits 22. De manière particulièrement avantageuse, le ressort hélicoïdal 24 est enfilé sur la tige 21 jusqu'à venir en appui contre le premier épaulement 21A, tandis que le capuchon est percé d'un trou dont la section est suffisamment grande pour que le capuchon puisse être enfilé lui aussi sur la tige 21 mais suffisamment réduite pour que le capuchon forme un appui contre lequel la deuxième extrémité du ressort 24 vient buter. On comprend que le coulissement du capuchon 26 en direction du fond 5A du module 5 provoque une mise en compression progressive du ressort 24, ce qui correspond à une augmentation du tarage de la soupape 18. Inversement, lorsque le capuchon 26 est éloigné du fond 5A du module 5, cela conduit à une relaxation du ressort 24 et donc à une diminution du tarage de la soupape 18. La compression progressive ou la décompression progressive du ressort 24 sous l'action du capuchon 26 ne provoque préférentiellement aucun mouvement de la soupape 18 qui reste maintenue immobile.

L'appareil 1 conforme à l'invention comprend un organe de commande 27 de la décompression de l'enceinte, capable de déplacer la soupape de régulation tarée 18 pour que cette dernière libère, de préférence progressivement, l'orifice 17 de façon à mettre en communication l'intérieur de l'enceinte avec l'extérieur. En d'autres termes, l'organe de commande 27 de la décompression est agencé pour forcer la soupape 18 à libérer l'orifice 17, quel que soit le niveau de pression régnant dans l'enceinte, pour décompresser l'appareil 1, c'est-à-dire faire chuter la pression régnant dans l'enceinte à une valeur sensiblement égale à la pression atmosphérique régnant à l'extérieur de l'appareil 1.

Ainsi, l'organe de commande 27 de la décompression permet d'amener et d'immobiliser la soupape de régulation tarée 18 dans une position de décompression (illustrée à la figure 8) qui est de préférence stable, prédéterminée et fixe, dans laquelle la soupape 18 libère de façon sensiblement permanente (c'est-à-dire indépendamment du tarage) l'orifice 17 pour permettre l'établissement d'un flux de fuite de vapeur conduisant à la décompression de l'enceinte.

De façon préférentielle, l'organe de commande 27 de la décompression est mobile relativement à l'enceinte et est agencé pour entraîner directement la soupape de régulation 18, c'est-à-dire qu'il est spécifiquement conçu pour que sa mise en mouvement génère un effort direct de déplacement de la soupape de régulation 18. De façon préférentielle, l'organe de commande 27 de la décompression est capable d'exercer un effort d'entraînement progressif sur la queue 20 de la tige 21 suffisant pour surmonter le tarage et écarter la tête 19 de l'orifice 17, afin de libérer ce dernier et permettre l'établissement d'un flux de fuite progressif de vapeur. Avantageusement, la queue 20 est pourvue à cet effet d'un moyen de transmission d'effort 20A, sur lequel l'organe de commande 27 de la décompression est capable d'exercer une poussée, ladite poussée formant ledit effort d'entraînement suffisant pour surmonter le tarage. L'effort exercé par l'organe de commande 27 sur la tige 21 engendre ainsi une traction axiale de ladite tige 21 vers l'extérieur de l'enceinte.

De façon préférentielle, la tige 21 présente un deuxième épaulement formant le moyen de transmission 20A, tel que cela est illustré aux figures. L'organe de commande 27 de la décompression est ainsi agencé pour exercer une poussée axiale, selon l'axe Y-Y', sur ce deuxième épaulement et faire ainsi coulisser la soupape 18 dans le puits 22, à l'encontre de la force de rappel exercée par le ressort 24, pour écarter la tête 18 de l'orifice 17, ce qui permet à la vapeur contenue dans l'enceinte de s'échapper par l'orifice 17.

Avantageusement, tel que cela est en particulier visible sur la figure 5, l'organe de commande 27 de la décompression comprend une première pièce rotative 28 pourvue d'une première rampe 29 destinée à engager la soupape 18, et plus précisément la queue 20 par l'intermédiaire du deuxième épaulement, pour exercer sur la soupape 18 ledit effort d'entraînement, lors de la rotation de ladite première pièce rotative 28.

De préférence, la première pièce rotative 28 est montée à rotation autour de l'axe X-X' sur un arbre 31 s'élevant à l'intérieur du module 5, à partir du fond 5A. La première pièce rotative 28 s'étend de préférence selon un plan sensiblement perpendiculaire à son axe de rotation X-X', de sorte que la première rampe 29 s'élève sensiblement parallèlement audit axe X-X'. Plus précisément, la première pièce rotative 28 présente une première face 28A, orientée vers l'extérieur de l'appareil 1, et une deuxième face 28B opposée faisant face à la face externe 3B du couvercle 3, la première face 28A étant positionnée sous la tête 20, et plus précisément sous son deuxième épaulement formant moyen d'entraînement 20A.

La première rampe 29 s'élève à partir de la première face 28A vers l'extérieur de l'appareil 1 et forme de préférence une pente progressive faisant saillie à la surface de la face 28A. Ainsi, lorsque la première pièce rotative 28 tourne autour de l'axe X-X' la première rampe 29 va venir se glisser sous la queue 20 et soulever progressivement cette dernière pour emmener progressivement la soupape 18 en position de décompression. De préférence, la première rampe 29 comprend à cet effet une pente continûment progressive 29A s'élevant à partir de la première face 28A jusqu'à un replat 29B formant un appui stable pour le deuxième épaulement ménagé dans la tige 21, au niveau de la queue 20.

Lorsque la queue 20 repose ainsi sur le replat 29B de la première rampe 29 (ce qui est illustré à la figure 8), la soupape 18 se trouve immobilisée de façon stable dans sa position de décompression.

Afin de favoriser la tenue mécanique et la fiabilité de l'appareil 1, la première pièce rotative 28 est préférentiellement pourvue d'une échancrure s'étendant, selon un segment de cercle centré sur l'axe X-X', entre la première face 28A et la seconde face 28B. Dans ce cas, la première rampe 29 est formée de deux rampes élémentaires s'étendant de part et d'autre de l'échancrure. L'échancrure accueille ainsi la tige 21, les deux rampes élémentaires étant à même d'engager la queue 20 de manière diamétralement opposée relativement à l'axe Y-Y', ce qui contribue à la stabilité mécanique de l'ensemble.

Conformément à l'invention, l'appareil 1 comprend en outre un organe de réglage du tarage 32 capable de déplacer le moyen d'ajustement 25 du tarage indépendamment de la soupape de régulation 18, pour modifier la valeur du niveau prédéterminé, c'est-à-dire la valeur de la pression de fonctionnement. L'organe de réglage du tarage 32 est ainsi capable d'influer sur la position du moyen d'ajustement du tarage 25 et ce sans agir sur la soupape de régulation 18. En d'autres termes, l'organe de réglage du tarage 32 est capable de déplacer le moyen d'ajustement du tarage 25 pour modifier la valeur du niveau prédéterminé de pression, sans mettre concomitamment en mouvement la soupape de régulation 18, c'est-à-dire sans impartir à cette dernière un quelconque effort d'entraînement simultané, tant en translation selon l'axe Y-Y' qu'en rotation autour de l'axe Y-Y'. Grâce à cette mesure technique, il est possible de modifier le tarage de la soupape sans agir mécaniquement sur cette dernière, ce qui en limite l'usure, en évitant notamment de générer des frottements d'usure inutiles entre d'une part la tête 19 et son joint 19A et d'autre part la face externe 3B du couvercle 3.

Avantageusement et de manière réciproque, l'organe de commande 27 de la décompression agit sur la soupape 18 sans agir sur l'organe de réglage du tarage 32 de la soupape 18.

Avantageusement, l'organe de commande 27 de la décompression est distinct de l'organe de réglage du tarage 32, c'est-à-dire que de manière préférentielle, l'organe de commande de la décompression 27 et l'organe de réglage du tarage 32 sont indépendants fonctionnellement, de sorte qu'un déplacement de l'organe de commande de la décompression n'entraîne pas nécessairement un déplacement de l'organe de réglage du tarage 32 et réciproquement. Il n'en reste pas moins que l'organe de commande de la décompression 27 et l'organe de réglage du tarage 32 peuvent tout à fait être portés par une pièce unique sans que l'on sorte du cadre de l'invention, comme cela va être décrit plus en détails dans ce qui suit.

Avantageusement, l'organe de réglage du tarage 32 est capable d'exercer sur la butée coulissante 26 formant le moyen d'ajustement du tarage 25 un effort de propulsion opposé à l'effort d'appui exercé par le corps élastique 23 sur la butée coulissante 26, ledit effort de propulsion étant suffisant pour faire coulisser la butée 26 et ajuster ainsi le tarage de la soupape 18. En d'autres termes, l'organe de réglage du tarage 32 est capable d'exercer un effort suffisant sur le moyen d'ajustement du tarage 25 pour surmonter la force exercée par le corps élastique 23 afin d'amener le moyen d'ajustement du tarage 25 dans une position prédéterminée et de maintenir ledit moyen d'ajustement du tarage 25 dans cette position prédéterminée, en s'opposant à l'effort de réaction exercé par le corps élastique 23 sur le moyen d'ajustement 25.

Dans la variante préférentielle illustrée aux figures, le moyen d'ajustement du tarage 25 est distinct de l'organe de réglage du tarage 32, c'est à dire que le moyen d'ajustement du tarage 25 et l'organe de réglage du tarage 32 sont préférentiellement formés par deux pièces respectives distinctes et indépendantes l'une de l'autre. Il est cependant tout à fait envisageable que le moyen d'ajustement du tarage 25 et l'organe de réglage du tarage 32 soient confondus, c'est-à-dire qu'ils soient tous deux formés par un seul et même moyen fonctionnel, lequel est de préférence dans ce cas formé par une pièce unique. Dans ce cas, l'organe de réglage 32 pourrait par exemple agir directement sur le ressort 24 pour régler la compression de ce dernier. Il est cependant préférable, afin d'améliorer l'interface mécanique entre le moyen de tarage (formé ici par le ressort 24) et l'organe de réglage du tarage 32, d'interposer entre eux un moyen d'ajustement 25 distinct et indépendant.

Avantageusement, l'organe de réglage du tarage 32 comprend une deuxième pièce rotative. Dans l'exemple illustré aux figures, cette deuxième pièce rotative est confondue avec la première pièce rotative 28, c'est-à-dire que la première pièce rotative 28 et la deuxième pièce rotative sont toutes deux formées par une seule et même pièce de commande rotative 28. Dans ce qui suit, la référence 28 sera donc utilisée pour désigner indifféremment la première pièce rotative, la deuxième pièce rotative ou la pièce de commande rotative. Il est bien évidemment tout à fait envisageable, sans pour autant que l'on sorte du cadre de l'invention, que la première et la deuxième pièce rotatives soient distinctes et indépendantes, sans pour autant que l'on sorte du cadre de l'invention.

Avantageusement, la deuxième pièce rotative 28 est pourvue d'une deuxième rampe 33 destinée à engager la butée coulissante 26 formant le moyen d'ajustement du tarage 25 pour exercer sur ladite butée 26, lors de la rotation de ladite deuxième pièce 28, ledit effort de propulsion suffisant pour faire coulisser la butée 26.

La deuxième rampe 33 s'élève à partir de la deuxième face 28B de la deuxième pièce rotative 28, vers l'intérieur de l'appareil 1 et forme de préférence une pente progressive faisant saillie à la surface de la deuxième face 28B, la surface de la première face 28A étant de préférence plane à l'endroit du positionnement de la deuxième rampe 33 (c'est à dire au droit de cette dernière), de façon à ce que la soupape reste maintenue à la même altitude (c'est à dire à une altitude sensiblement constante) au cours du tarage. Ainsi, lorsque la deuxième pièce rotative 28 tourne autour de l'axe X-X' la deuxième rampe 33 va venir glisser contre le capuchon formant la butée 26 et enfoncer progressivement ledit capuchon pour augmenter le tarage de la soupape 18. De préférence, la deuxième rampe 33 comprend à cet effet une pente continûment progressive 33A s'élevant à partir de la deuxième face 28B jusqu'à un replat 33B formant un appui stable pour le capuchon formant la butée 26. Le capuchon n'a avantageusement pas d'action directe sur le positionnement de ladite soupape, laquelle reste à la même altitude pendant le tarage. Il est donc possible de régler le tarage sans simultanément agir directement sur la soupape elle-même.

Lorsque le capuchon repose ainsi sur le replat 33B de la deuxième rampe 33 (ce qui est illustré à la figure 7), le ressort 24 se trouve immobilisée de façon stable dans une configuration correspondant à un niveau de tarage prédéterminé.

De manière préférentielle, la deuxième rampe 33 est formée elle aussi de deux rampes élémentaires s'étendant de part et d'autre de l'échancrure.

En définitive, et de manière particulièrement préférentielle, l'invention met en oeuvre une pièce de commande rotative 28 présentant une première face 28A venant en appui contre le moyen de transmission 20A et une deuxième face 28B qui est opposée à la première face 28A et vient en appui contre la butée 26, la première rampe 29 s'élevant à partir de la première face 28A tandis que la deuxième rampe 33 s'élève à partir de la deuxième face 28B, selon un sens d'extension opposé à celui de la première rampe 29. En définitive, la face 28A est plane au niveau de la rampe 33 et la face 28B est plane au niveau de la rampe 29. Ainsi et de façon préférentielle, le mouvement rotatif de l'organe de commande 27 soulève la soupape 18 de l'orifice 17, en position de décompression, lors de son passage par la rampe 29 ou maintient à une même altitude ladite soupape, en position de tarage, lors de son passage sur la rampe 33.

Avantageusement, l'organe de commande 27 de la décompression est relié fonctionnellement à l'organe de réglage du tarage 32 de façon que pendant que l'organe de commande 27 de la décompression déplace la soupape de régulation tarée 18 pour que cette dernière libère l'orifice 17, l'organe de réglage du tarage 32 maintient sensiblement immobile le moyen d'ajustement du tarage 25, de telle sorte que la décompression s'effectue à tarage sensiblement constant. Cette mesure technique permet un excellent contrôle de la progressivité de la décompression par l'utilisateur, en excluant toute chute incontrôlée de pression qui serait due à un détarage de la soupape 18 concomitant à l'action de l'organe de commande 27 de la décompression.

De préférence, afin de réaliser cette fonction de décompression à tarage constant, la deuxième face 28B de la pièce de commande 28 est sensiblement plane au droit de la première rampe 29, pour maintenir immobile en position la butée 26 pendant la rotation de la pièce de commande rotative 28, tel que cela est illustré aux figures.

La pièce de commande 28 peut avantageusement se mouvoir en rotation selon une course angulaire délimitée par l'amplitude de l'échancrure ménagée en son sein et qui permet le passage de la tige 21. Cette échancrure s'élargit en une lumière de montage 34 ménagée par exemple à proximité du replat 29B de la première rampe 29 et permettant le passage de la queue 20. Bien évidemment, une fois le module 5 complètement assemblé, une butée (non représentée) empêche la queue 20 de tomber dans le trou de montage 34. A l'opposé du trou de montage 34 est ménagé un premier dégagement 35 (réalisé par exemple par un élargissement local de l'échancrure) pour la queue 20, ledit dégagement 35 étant positionné à l'aplomb du replat 33B de la deuxième rampe 33.

Le positionnement de la queue 20 à l'aplomb du dégagement 35 correspond à un premier niveau de tarage (illustré à la figure 7) dans lequel la butée 26 est soumise à l'action de compression exercée par la seconde rampe 33. Un deuxième dégagement 36 est avantageusement ménagé dans l'échancrure, par exemple à mi-longueur de cette dernière, entre le premier dégagement 35 et le trou de montage 34. Ce second dégagement 36 correspond avantageusement à un deuxième niveau de tarage (illustré à la figure 6), dans lequel, dans l'exemple illustré aux figures, la butée 26 n'est plus soumise à l'action de compression de la seconde rampe 33. Bien évidemment, il est tout à fait envisageable que pour obtenir le deuxième niveau de tarage, la butée 26 reste soumise à l'action de la seconde rampe 33, cette dernière exerçant alors, du fait de sa forme en pente, une action de compression moindre sur la butée 26 que celle qu'elle exerçait lorsque la queue 20 se trouvait en regard du premier dégagement 35.

La pièce de commande 28 est de préférence fixée à un sélecteur rotatif 37 monté à rotation sur le module 5, autour de l'axe X-X'. Le sélecteur 37 est pourvu d'une poignée 37A permettant à l'utilisateur de commander la rotation de la pièce 28, par l'intermédiaire d'un encastrement réalisé par insertion d'une cheville 37B issue du sélecteur 37 dans une niche 38 correspondante réalisée dans la pièce de commande 28.

Le sélecteur 37 est également pourvu d'un onglet indicateur, confondu en l'occurrence avec la poignée 37A, qui, en coopération avec des repères visuels fixes 39, 40, 41 ménagés sur le module 5, permet à l'utilisateur de savoir immédiatement dans quelle configuration se trouve la soupape 18.

Le repère 39 correspond ainsi à la sélection d'un premier tarage (pour lequel la queue 20 est positionnée au droit du premier dégagement 35, le repère 40 correspondant quant à lui à un deuxième tarage inférieur au premier (la queue 20 se trouvant alors au droit du second dégagement 36, tandis que le repère 41 correspond à la position de décompression (la queue 20 étant alors en appui sur et contre le replat 29B de la première rampe 29).

Le fonctionnement d'un appareil de cuisson 1 selon l'invention, conforme au mode de réalisation illustré aux figures 1 à 8, va être décrit dans ce qui suit.

L'utilisateur rapporte tout d'abord le module 5 sur le couvercle 3, en enfilant l'axe fileté 6 dans l'orifice correspondant ménagé dans le couvercle 3 et en fixant le module 5 à l'aide de l'écrou de blocage 8 vissé sur l'axe fileté 6. Dans cette configuration, le joint annulaire 15A vient en appui étanche contre la face externe 3B du couvercle 3, mettant ainsi en communication étanche l'orifice 17 avec la chambre 15 et le conduit d'évacuation 16.

L'utilisateur introduit au sein de la cuve 2 les aliments à cuire, au besoin à l'aide d'un panier de cuisson (non représenté) lui-même disposé au sein de la cuve 2. L'utilisateur rapporte ensuite le couvercle 3 équipé de son module de commande 5 sur la cuve 2 et procède au verrouillage de l'appareil 1 à l'aide des mâchoires 4, le déplacement radial de ces dernières étant commandé par les boutons 9, 10.

A l'aide du sélecteur rotatif 37, l'utilisateur sélectionne l'une ou l'autre des positions indexées de tarage à sa disposition, correspondant respectivement aux repères 39 et 40 matérialisés par des pictogrammes sur le module 5. Par exemple, l'utilisateur fait tourner la pièce 28 par l'intermédiaire du sélecteur 37 de façon à amener la queue 20 à l'aplomb du premier dégagement 35, ce qui a pour effet de presser, à l'aide de la rampe 33, la butée 26, conférant ainsi un tarage maximal à la soupape 18 (configuration illustrée à la figure 7).

L'appareil 1 est alors soumis à la chaleur d'une plaque de cuisson sur laquelle il repose. La chaleur dégagée par la plaque de cuisson est transmise, par l'intermédiaire du fond 2A, aux aliments disposés à l'intérieur de l'enceinte de cuisson formée par l'assemblage de la cuve 2 et du couvercle 3. Sous l'effet de cet apport de chaleur, la pression régnant à l'intérieur de l'enceinte augmente. Dès que cette pression devient supérieure à un niveau prédéterminé, correspondant au tarage exercé par le ressort, la tête 19 et le joint 19A s'éloignent de la face externe 3B du couvercle 3, ce qui entraîne une fuite de vapeur vers l'extérieur permettant ainsi la régulation automatique de la pression à l'intérieur de l'enceinte. Ce flux de fuite de vapeur passe tout d'abord par l'orifice 17, puis par la chambre 15 pour s'échapper enfin par le tuyau d'évacuation 16.

L'utilisateur peut à tout moment modifier le niveau de tarage appliqué à la soupape 18 en agissant sur le sélecteur 37 pour amener le second dégagement 36 au droit de la queue 20. Une telle manoeuvre aurait pour effet de faire cesser progressivement l'interaction entre la rampe 33 et la butée 26 jusqu'à ce que la butée 26 vienne directement en appui contre la deuxième face 28B, permettant ainsi de décomprimer progressivement le ressort 24 jusqu'à obtenir un deuxième niveau de tarage prédéterminé inférieur au premier niveau maximal appliqué précédemment. La configuration correspondant à ce deuxième niveau de tarage est plus précisément illustrée aux figures 5 et 6.

A la fin du cycle de cuisson, l'utilisateur peut procéder à la décompression de d'appareil 1 en amenant le sélecteur 37 dans la position indexée de décompression matérialisée par le pictogramme correspondant au repère 41. Cela entraîne, par l'intermédiaire de la première rampe 29, l'exercice d'un effort axial sur la soupape 18 contraire et supérieur à l'effort de rappel exercé par le ressort 24, tandis que la position axiale de la butée 26 reste inchangée, du fait du caractère plan de la deuxième face 28B au droit de la première rampe 29.

Cet effort axial exercé par la première rampe 29 permet, alors que le niveau de tarage reste constant et correspond au deuxième niveau de tarage prédéterminé, de soulever la soupape 18 d'une hauteur prédéterminée, suffisante pour assurer une perte de contact du joint d'étanchéité 19A avec la face externe 3B du couvercle 3, libérant ainsi l'orifice 17. Grâce au caractère progressif de la pente de la rampe 29, l'utilisateur peut de plus piloter le degré de libération de l'orifice 17, de manière à adapter progressivement le débit de fuite et éviter toute projection dangereuse. De surcroît, grâce à la mise en oeuvre d'une pièce de commande 28 unique pour piloter la décompression et le tarage, l'utilisateur est assuré de ne pas laisser par inadvertance l'appareil 1 en décompression alors qu'une pression de fonctionnement est sélectionnée.

Ainsi, dans sa variante la plus avantageuse, l'invention permet à l'utilisateur de piloter de manière fine et indépendante une multitude de fonctions par l'intermédiaire d'un agencement particulièrement fiable et économique, mettant en oeuvre un minimum de pièces. De surcroît, l'invention ne met en oeuvre que des mouvements simples (translation pure pour la soupape de régulation 18 et la butée 26, et rotation pure pour la pièce de commande 28) sans mouvement complexe propice au grippage, du genre mouvement hélicoïdal (vissage/dévissage). De plus, l'appareil 1 illustré aux figures met en oeuvre une disposition de pièces avec une chaîne de cotes minimum contribuant à la robustesse de la construction, chacun des points de référence et d'appui de ces chaînes de cotes étant sensiblement dans l'axe Y-Y' de la soupape 18, ce qui minimise les imprécisions.

## Revendications

1. Appareil (1) de cuisson d'aliments sous pression, agencé pour former une enceinte de cuisson, comprenant un orifice (17) de mise en communication de l'intérieur de l'enceinte avec l'extérieur, une soupape de régulation tarée (18) coopérant avec l'orifice (17) pour maintenir la pression régnant dans l'enceinte à un niveau prédéterminé, et un moyen d'ajustement du tarage (25) de ladite soupape tarée (18), ledit moyen d'ajustement (25) étant capable de se déplacer entre au moins deux positions correspondant respectivement à deux valeurs distinctes dudit niveau prédéterminé, **caractérisé en ce qu'**il comprend un organe de commande de la décompression (27) de l'enceinte, capable de déplacer la soupape de régulation tarée (18) pour que cette dernière libère l'orifice (17) de façon à mettre en communication l'intérieur de l'enceinte avec l'extérieur, et **en ce qu'**il comprend un organe de réglage du tarage (32) capable de déplacer le moyen d'ajustement du tarage (25) indépendamment de la soupape de régulation (18), pour modifier la valeur du niveau prédéterminé.

2. Appareil (1) selon la revendication 1 **caractérisé en ce que** le moyen d'ajustement du tarage (25) est distinct de l'organe de réglage du tarage (32).

3. Appareil (1) selon la revendication 1 ou 2 **caractérisé en ce que** l'organe de commande (27) de la décompression est distinct de l'organe de réglage du tarage (32).

4. Appareil (1) selon l'une des revendications 1 à 3 **caractérisé en ce que** le moyen d'ajustement du tarage (25) est monté à coulissement sur l'enceinte de cuisson.

5. Appareil (1) selon l'une des revendications 1 à 4 **caractérisé en ce que** l'organe de commande (27) de la décompression est mobile et agencé pour entraîner directement la soupape de régulation (18).

6. Appareil (1) selon l'une des revendications 1 à 5 **caractérisé en ce que** la soupape (18) s'étend entre d'une part une tête (19) destinée à obturer l'orifice (17) sous l'effet du tarage et d'autre part une queue (20) libre, l'organe de commande (27) de la décompression étant capable d'exercer un effort d'entraînement sur la queue (20) suffisant pour surmonter le tarage et écarter la tête (19) de l'orifice (17), afin de libérer ce dernier.

7. Appareil (1) selon la revendication 6 **caractérisé en ce que** la queue (20) est pourvue d'un moyen de transmission d'effort (20A) sur lequel l'organe de commande (27) de la décompression est capable d'exercer une poussée formant ledit effort d'entraînement suffisant pour surmonter le tarage et écarter la tête (19) de l'orifice (17), afin de libérer ce dernier.

8. Appareil (1) selon la revendication 7 **caractérisé en ce que** la soupape (18) comprend une tige (21) s'étendant axialement entre la queue (20) et la tête (19), ladite tige (21) présentant un épaulement formant le moyen de transmission (20A).

9. Appareil (1) selon l'une des revendications 6 à 8 **caractérisé en ce que** l'organe de commande (27) de la décompression comprend une première pièce rotative (28) pourvue d'une première rampe (29) destinée à engager ladite soupape (18) pour exercer sur cette dernière ledit effort d'entraînement, lors de la rotation de ladite première pièce (28).

10. Appareil (1) selon l'une des revendications 1 à 9 **caractérisé en ce que** ladite soupape (18) est tarée à l'aide d'un corps élastique (23) exerçant un effort d'appui sur une butée (26) coulissante formant le moyen d'ajustement du tarage (25), l'organe de réglage du tarage (32) étant capable d'exercer sur ladite butée (26) un effort de propulsion opposé à l'effort d'appui, suffisant pour faire coulisser la butée (26) et ajuster ainsi le tarage.

11. Appareil (1) selon la revendication 10 **caractérisé en ce que** l'organe de réglage du tarage (32) comprend une deuxième pièce rotative (28) pourvue d'une deuxième rampe (33) destinée à engager ladite butée (26) pour exercer sur cette dernière ledit effort de propulsion, lors de la rotation de ladite deuxième pièce (28).

12. Appareil (1) selon les revendications 9 et 11 **caractérisé en ce que** la première pièce rotative et la deuxième pièce rotative sont toutes deux formées par une seule et même pièce de commande rotative (28) présentant une première face (28A) venant en appui contre le moyen de transmission (20A) et une deuxième face (28B) qui est opposée à la première face (28A) et vient en appui contre la butée (26), la première rampe (29) s'élevant à partir de la première face (28A) tandis que la deuxième rampe (33) s'élève à partir de la deuxième face (28B).

13. Appareil (1) selon l'une des revendications 1 à 12 **caractérisé en ce que** l'organe de commande (27) de la décompression est relié fonctionnellement à l'organe de réglage du tarage (32) de façon que pendant que l'organe de commande (27) de la décompression déplace la soupape de régulation tarée (18) pour que cette dernière libère l'orifice (17), l'organe de réglage du tarage (32) maintient sensiblement immobile le moyen d'ajustement du tarage (25), de telle sorte que la décompression s'effectue à tarage sensiblement constant.

14. Appareil (1) selon les revendications 12 et 13 **caractérisé en ce que** la deuxième face (28B) est sensiblement plane au droit de la première rampe (29), pour maintenir immobile en position la butée (26) pendant la rotation de la pièce de commande rotative (28).

15. Appareil (1) selon l'une des revendications 1 à 14 **caractérisé en ce qu'**il constitue un autocuiseur domestique.

## Claims

1. An appliance (1) for cooking food under pressure, the appliance being arranged to form a cooking enclosure that includes an orifice (17) for putting the inside of the enclosure into communication with the outside, a settable pressure-regulation valve (18) co-operating with the orifice (17) to maintain the pressure that exists inside the enclosure at a predetermined level, and adjustment means (25) for adjusting the setting of said settable valve (18), said adjustment means (25) being capable of moving between at least two positions corresponding respectively to two distinct values for said predetermined level, the appliance being **characterized in that** it includes a member (27) for controlling decompression of the enclosure, which member is capable of moving the settable pressure-regulation valve (18) so that it opens the orifice (17) in such a manner as to put the inside of the enclosure into communication with the outside, and **in that** it includes a setting adjustment member (32) capable of moving the setting adjustment means (25) independently of the pressure-regulation valve (18), to modify the value of the predetermined level.

2. An appliance (1) according to claim 1, **characterized in that** the setting adjustment means (25) are distinct from the setting adjustment member (32).

3. An appliance (1) according to claim 1 or claim 2, **characterized in that** the decompression control member (27) is distinct from the setting adjustment member (32).

4. An appliance (1) according to any one of claims 1 to 3, **characterized in that** the setting adjustment means (25) are mounted to slide relative to the cooking enclosure.

5. An appliance (1) according to any one of claims 1 to 4, **characterized in that** the decompression control member (27) is movable and arranged to drive the pressure-regulation valve (18) directly.

6. An appliance (1) according to any one of claims 1 to 5, **characterized in that** Lhe valve (18) extends between firstly a head (19) for closing the orifice (17) under the effect of the setting, and secondly a tail (20) that is free, the decompression control member (27) being capable of exerting a drive force on the tail (20) that is sufficient to overcome the setting and to move the head (19) away from the orifice (17) so as to open the orifice.

7. An appliance (1) according to claim 6, **characterized in that** the tail (20) is provided with force transmission means (20A) on which the decompression control member (27) can exert thrust forming said drive force sufficient to overcome the pressure setting and move the head (19) away from the orifice (17), in order to open the orifice.

8. An appliance (1) according to claim 7, **characterized in that** the valve (18) comprises a stem (21) extending axially between the tail (20) and the head (19), said stem (21) presenting a shoulder forming the transmission means (20A).

9. An appliance (1) according to any one of claims 6 to 8, **characterized in that** the decompression control member (27) comprises a first rotary part (28) provided with a first ramp (29) for engaging said valve (18) to exert thereon during turning of said first part (28).

10. An appliance (1) according to any one of claims 1 to 9, **characterized in that** said valve (18) is set with the help of a resilient body (23) exerting a bearing force on a slidable abutment (26) forming the setting adjustment means (25), the setting adjustment member (32) being capable of exerting a propulsion force on said abutment (26) opposite to the bearing force and sufficient to cause the abutment (26) to slide, thereby adjusting the setting.

11. An appliance (1) according to claim 10, **characterized in that** the setting adjustment member (32) includes a second rotary part (28) provided with a second ramp (33) for engaging said abutment (26) to exert said propulsion force thereon during turning of said second part (28).

12. An appliance (1) according to claims 9 and 11, **characterized in that** the first rotary part and second rotary part are both formed by a single rotary control part (28) presenting a first face (28A) for bearing against the transmission means (20A), and second face (28B) opposite to the first face (28A) for bearing against the abutment (26), the first ramp (29) projecting from the first face (28A), while the second ramp (33) projects from the second face (28B).

13. An appliance (1) according to any one of claims 1 to 12, **characterized in that** the decompression control member (27) is functionally connected to the setting adjustment member (32) in such a manner that when the decompression control member (27) moves the settable pressure-regulation valve (18) so that it opens the orifice (17), the setting adjustment member (32) keeps the setting adjustment means (25) substantially stationary so that decompression takes place at a substantially constant setting.

14. An appliance (1) according to claims 12 and 13, **characterized in that** the second face (28B) is substantially plane in register with the first ramp (29) so as to keep the abutment (26) stationary in position while the rotary control part (28) is turning.

15. An appliance (1) according to any one of claims 1 to 14, **characterized in that** it constitutes a pressure cooker for home use.

## Patentansprüche

1. Gerät (1) zum Garen von Nahrungsmitteln unter Druck, das ausgelegt ist, um einen Gareinschluss zu bilden, der eine Öffnung (17) zum Herstellen der Kommunikation zwischen dem Inneren des Einschlusses und der Außenseite, ein tariertes Regelventil (18), das mit der Öffnung (17) zusammenwirkt, um den Druck, der in dem Einschluss herrscht, auf einem vorbestimmten Niveau zu halten, und ein Mittel (25) zum Einstellen der Tarierung des tarierten Ventils (18) aufweist, wobei sich das Einstellmittel (25) zwischen mindestens zwei Positionen bewegen kann, die jeweils zwei unterschiedlichen Werten des vorbestimmten Niveaus entsprechen, **dadurch gekennzeichnet, dass** es ein Organ zum Steuern des Druckablassens (27) des Einschlusses aufweist, das das tarierte Regelventil (18) bewegen kann, so dass dieses Letztere die Öffnung (17) derart freigibt, dass das Innere des Einschlusses mit der Außenseite kommuniziert, und dass es ein Organ (32) zum Einstellen der Tarierung aufweist, das das Einstellmittel (25) der Tarierung unabhängig von dem Regelventil (18) bewegen kann, um den Wert des vorbestimmten Niveaus zu ändern.

2. Gerät (1) nach Anspruch 1, **dadurch gekennzeichnet, dass** das Einstellmittel der Tarierung (25) von dem Einstellorgan der Tarierung (32) getrennt ist.

3. Gerät (1) nach Anspruch 1 oder 2, **dadurch gekennzeichnet, dass** das Steuerorgan (27) des Druckablassens von dem Einstellorgan der Tarierung (32) getrennt ist.

4. Gerät (1) nach einem der Ansprüche 1 bis 3, **dadurch gekennzeichnet, dass** das Einstellmittel der Tarierung (25) auf dem Gareinschluss gleitend montiert ist.

5. Gerät (1) nach einem der Ansprüche 1 bis 4, **dadurch gekennzeichnet, dass** das Steuerorgan (27) des Druckablassens beweglich und eingerichtet ist, um das Regelventil (18) direkt anzutreiben.

6. Gerät (1) nach einem der Ansprüche 1 bis 5, **dadurch gekennzeichnet, dass** sich das Ventil (18) zwischen einerseits einem Kopf (19), der dazu bestimmt ist, die Öffnung (17) unter der Einwirkung der Tarierung zu verschließen, und andererseits einem freien Endstück (20) erstreckt, wobei das Steuerorgan (27) des Druckablassens eine Antriebskraft auf das Endstück (20) ausüben kann, die ausreicht, um die Tarierung zu überwinden und den Kopf (19) von der Öffnung (17) abzuspreizen, um diese Letztere freizugeben.

7. Gerät (1) nach Anspruch 6, **dadurch gekennzeichnet, dass** das Endstück (20) mit einem Kraftübertragungsmittel (20A) versehen ist, auf das das Steuerorgan (27) des Druckablassens einen Schub ausüben kann, der die Antriebskraft bildet, die ausreicht, um die Tarierung zu überwinden und den Kopf (19) von der Öffnung (17) abzuspreizen, um diese Letztere freizugeben.

8. Gerät (1) nach Anspruch 7, **dadurch gekennzeichnet, dass** das Ventil (18) einen Schaft (21) aufweist, der sich axial zwischen dem Endstück (20) und dem Kopf (19) erstreckt, wobei der Schaft (21) einen Ansatz aufweist, der das Übertragungsmittel (20A) darstellt.

9. Gerät (1) nach einem der Ansprüche 6 bis 8, **dadurch gekennzeichnet, dass** das Steuerorgan (27) des Druckablassens einen ersten Drehteil (28) aufweist, der mit einer ersten Rampe (29) versehen ist, die dazu bestimmt ist, das Ventil (18) zu ergreifen, um auf dieses Letztere bei der Drehung des ersten Teils (28) die Antriebskraft auszuüben.

10. Gerät (1) nach einem der Ansprüche 1 bis 9, **dadurch gekennzeichnet, dass** das Ventil (18) mit Hilfe eines elastischen Körpers (23) tariert ist, der eine Druckkraft auf einen gleitenden Anschlag (26), der das Einstellmittel der Tarierung (25) bildet, ausübt, wobei das Einstellorgan der Tarierung (32) auf den Anschlag (26) eine Antriebskraft ausüben kann, die der Druckkraft entgegengesetzt ist, und die ausreicht, um den Anschlag (26) zu schieben und daher die Tarierung einzustellen.

11. Gerät (1) nach Anspruch 10, **dadurch gekennzeichnet, dass** das Einstellorgan der Tarierung (32) einen zweiten Drehteil (28) aufweist, der mit einer zweiten Rampe (33) versehen ist, die dazu bestimmt ist, den Anschlag (26) zu ergreifen, um auf dieses Letztere die Antriebskraft beim Drehen des zweiten Teils (28) auszuüben.

12. Gerät (1) nach den Ansprüchen 9 und 11, **dadurch gekennzeichnet, dass** der erste Drehteil und der zweite Drehteil beide aus einem gleichen Drehsteuerteil (28) gebildet sind, der eine erste Seite (28A) aufweist, die gegen das Übertragungsmittel (20A) zum Aufliegen kommt, und eine zweite Seite (28B), die der ersten Seite (28A) entgegengesetzt ist und gegen den Anschlag (26) zum Aufliegen kommt, wobei sich die erste Rampe (29) ausgehend von der ersten Seite (28A) erhebt, während sich die zweite Rampe (33) ausgehend von der zweiten Seite (28B) erhebt.

13. GeräL (1) nach einem der Ansprüche 1 bis 12, **dadurch gekennzeichnet, dass** das Steuerorgan (27) des Druckablassens funktional mit dem Einstellorgan der Tarierung (32) derart verbunden ist, dass das Einstellorgan der Tarierung (32), während das Steuerorgan (27) des Druckablassens das tarierte Regelventil (18) bewegt, damit dieses Letztere die Öffnung (17) freigibt, das Einstellmittel der Tarierung (25) derart im Wesentlichen bewegungslos hält, dass das Druckablassen bei im Wesentlichen konstanter Tarierung erfolgt.

14. Gerät (1) nach den Ansprüchen 12 und 13, **dadurch gekennzeichnet, dass** die zweite Seite (28B) im Wesentlichen im rechten Winkel zu der ersten Rampe (29) eben ist, um den Anschlag (26) während des Drehens des Drehsteuerteils (28) in Position bewegungslos zu halten.

15. Gerät (1) nach einem der Ansprüche 1 bis 14, **dadurch gekennzeichnet, dass** es einen Haushaltsschnellkochtopf bildet.
